# EUROPEAN PATENT APPLICATION

(11) **EP 3 226 057 A2**
(43) Date of publication of application: **04.10.2017**
(21) Application number: 17020113.1
(22) Date of filing: 23.03.2017
(51) Int. Cl.: G02B 21/00, G02B 21/24

(54) **ANALYSIS DEVICE**

(30) Priority: 30.03.2016 GB 201605288
(71) Applicant: Troika Systems Limited, Highworth, Wiltshire SN6 7NS (GB)
(72) Inventor: Hall, Philip, Wittshire SN6 7NS (GB); Collings, Timothy, Wittshire SN6 7NS (GB)
(74) Representative: Bailey, Richard Alan

(57) **Abstract**

An analysis device 10 is described comprising a scanning microscope 14 mounted upon a support 16 such that at least part of the microscope 14 is movable relative to the support 16, and magnetic mounting means associated with the support 16 and/or with a part of the microscope 14 attached to the support 16 whereby the analysis device 10 can be attached to a roll 12, in use.

## Description

This invention relates to an analysis device, and in particular to an analysis device adapted for use in analysis of the surface of rolls, such as anilox rolls or the like.

Anilox rolls as used in the printing industry typically take the form of a roll treated to have pores in the surface thereof. By way of example, one type of roll in common use comprises a metallic core to the outer surface of which is applied a ceramic material. In use, ink is transported by the roll, the ink being carried within pores present in the ceramic material. Over time, inadequate cleaning may result in some ink may become solidified within some of the pores, reducing the quantity of ink that can be carried by the roll. Incorrect setting of the press may further result in wear occurring which, similarly, may impact upon the volumes of the pores available to carry ink. In order to achieve good quality printing, it is important to understand the condition of the roll, to example to understand the size of the pores available to carry the ink. With this information, the printing operation may be adjusted to compensate for variations in the capacity of the roll, or decisions may be made regarding replacement or substitution of the roll.

Other forms of roll are known in which materials other than ceramics are used. By way of example, chromed anilox roll are known. Analysis of such rolls, for substantially the reasons set out above, is desirable.

One form of analysis device used to permit analysis of the pores of an anilox roll is an AniCAM device produced by Troika Systems Limited. The AniCAM device takes the form of a scanning microscope carried upon a support. In use, the device is sat upon a roll to be analysed. Part of the scanning microscope is movable by an electrically driven motor in the radial direction relative to the roll to allow the microscope to scan to different depths and acquire data indicative of the volumes of the pores in the roll available for use in carrying ink.

It will be appreciated that by positioning the AniCAM device in a series of positions along the length of the roll, and by positioning the device upon the roll with the roll in a range of angular positions, data indicative of the condition of the roll can be acquired for subsequent use in controlling a printing operation to ensure that an acceptably high quality printed product can be achieved.

In some applications, with the roll mounted within a printing press little space is available above the roll and so positioning of the analysis device upon the roll may not be possible with the roll in situ.

In some applications, for example where printing onto corrugated board, the rolls are of very large dimensions and are relatively heavy. As a result, if insufficient space is available to allow the analysis to be undertaken in situ, and so removal of the rolls is required to allow analysis to be undertaken, since regular removal of the rolls to allow analysis of the condition thereof is not practical, requiring the press to be taken out of action for an extended period of time, analysis of the rolls is not undertaken as regularly as would be desired.

With reference is made herein to the analysis of anilox rolls, it will be appreciated that the invention is not restricted in this regard and may be employed in the analysis of rolls or other components of other forms.

It is an object of the invention to provide an analysis device suitable for use in such applications.

According to an aspect of the invention there is provided an analysis device comprising a scanning microscope mounted upon a support such that at least part of the microscope is movable relative to the support, and magnetic mounting means associated with the support and/or with a part of the microscope attached to the support whereby the analysis device can be attached to a roll, in use.

In some applications, particularly in applications in which rolls of large dimensions are used, the metallic cores of the rolls are often of steel construction. Accordingly, the analysis device of the invention can be attached by the magnetic mounting means to such rolls in a wide range of angular orientations, there being no requirement for the analysis device to sit upon the top of the roll in order for analysis to be undertaken. Analysis of large rolls where insufficient space is available to allow the analysis device to be positioned upon the top of the roll may thus be undertaken without requiring removal of the rolls. Analysis may thus be undertaken more regularly.

The support preferably comprises a pair of legs arranged parallel to one another and arranged, in use, to engage the surface of the roll, each leg extending substantially parallel to the roll. Each leg is preferably of hollow form, and the magnetic mounting means preferably comprises at least one magnet located within at least one of the legs. For stability, preferably both legs are provided with at least one magnet.

Each leg preferably accommodates a plurality of magnets. The magnets preferably comprise disc magnets.

Preferably, the magnetic mounting means further comprises at least one spacer plate located between a pair of the magnets. The magnets of the said pair are preferably oppositely orientated such that a magnetic repulsive force is present therebetween.

Such an arrangement has been found to provide a good level of magnetic attraction to the roll, and as a result the analysis device can be securely attached in position, in use, in a wide range of angular orientations relative to a roll with substantially no relative movement occurring between the analysis device and the roll once the analysis device has been attached to the roll. After analysis, the device can be pulled away from the roll and reattached, if desired, in another location for further analysis to be undertaken.

The support preferably further comprises a motorised drive arrangement whereby at least part of the microscope can be driven for movement relative to the support. The motorised drive arrangement may comprise, for example, an electrically operable motor such as a stepper motor, and a gear arrangement, operable to allow the microscope to be driven for movement relative to the support through very small, accurately determined distances in the radial direction of the roll being analysed, in use. The drive arrangement preferably includes a release mechanism to allow movement of the microscope independently of the operation of the drive arrangement, for example to reduce the risk of damage to the microscope if the microscope engages the roll, in use, or another object. The release mechanism preferably includes a magnetic coupling that is engaged in normal use, and that can release in the event that a load greater than a predetermined load is experienced.

The magnetic coupling preferably comprises a first coupling member movable by the motor of the drive arrangement and a second coupling member associated with the microscope, the first and second coupling members being arranged to engage one another in use, each coupling member carrying a magnet, the magnets being arranged to attract one another to retain the coupling members in engagement with one another in normal use.

Such an arrangement is advantageous in that the risk of damage to the microscope is reduced. When used in an orientation in which gravitational forces would tend to separate the coupling members, the magnetic attraction arising from the presence of the magnets results in the coupling members being maintained in contact with one another in normal use. Furthermore, the magnetic attraction may result in the coupling members adopting a position in which the risk of binding with other components is reduced.

The invention further relates to an analysis device comprising a scanning microscope mounted upon a support such that at least part of the microscope is movable relative to the support, wherein the support further comprises a motorised drive arrangement whereby at least part of the microscope can be driven for movement relative to the support, the drive arrangement including a release mechanism to allow movement of the microscope independently of the operation of the drive arrangement, and wherein the release mechanism includes a magnetic coupling that is engaged in normal use, and that can release in the event that a load greater than a predetermined load is experienced.

The invention will further be described, by way of example, with reference to the accompanying drawings, in which:

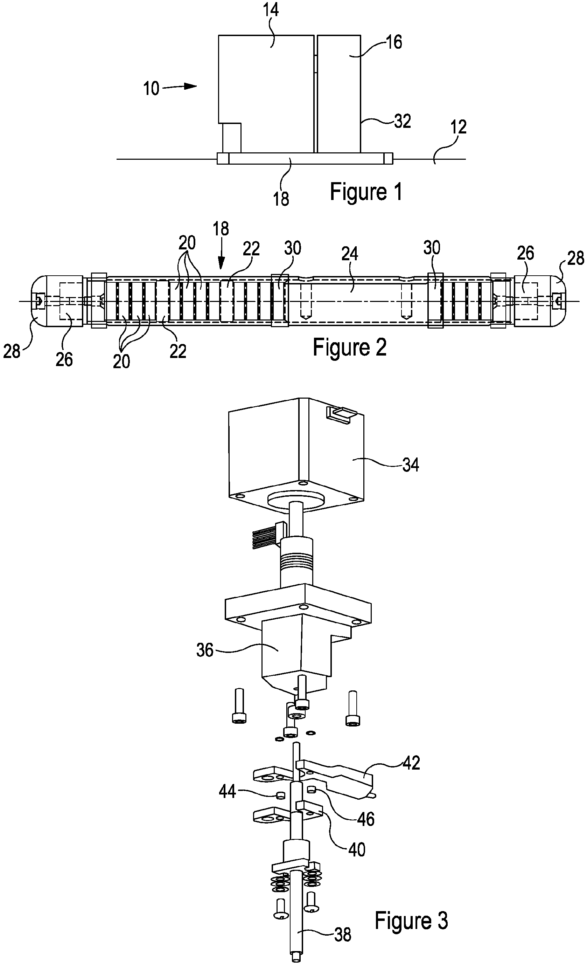

Figure 1 illustrates an analysis device in accordance with an embodiment of the invention, in use;
Figure 2 is a sectional view illustrating part of the analysis device of Figure 1; and
Figure 3 is an exploded view illustrating another part of the analysis device of Figure 1.

Referring to the accompanying drawings, an analysis device 10 is illustrated, the analysis device 10 being adapted for use in analysing parts of a roll 12 to provide information on the condition thereof, for example outputting information indicative of the dimensions of pores therein available to carry ink. However, it will be appreciated that the invention may be employed in other applications, and so is not restricted in this regard.

The analysis device 10 comprises a scanning microscope 14 mounted upon a support 16. The support 16 includes a pair of legs 18 (only one of which is visible in the drawings) that extend substantially parallel to one another and lie, in use, upon the surface of the roll 12, extending substantially parallel to the axis thereof. The legs 18 are spaced apart from one another, and the microscope 14 is positioned such that the target area of the roll 12 being analysed at any given time is the part located between the legs 18.

Each leg 18 is of hollow tubular form. Within each leg 18 is located a series of disc magnets 20. The magnets 20 are arranged in groups, the magnets 20 within each group being arranged such that a N pole face of one of the magnets 20 faces towards a S pole face of an adjacent one of the magnets 20, such that the magnets 20 within each group are magnetically attracted towards one another. Between adjacent groups of magnets 20, spacer elements 22 are located. The groups of magnets 20 are arranged such that both faces of each spacer element 22 are exposed to the same magnetic polarity. As a consequence, the groups of magnets 20 located to each side of each spacer element 22 magnetically repel one another.

Part way along the length of each leg 18 is provided an inner support 24 to which, in use, the remainder of the support 16 is secured. The ends of the legs 18 are closed by end plugs 26, the designs of which are such that the groups of magnets 20 and spacer elements 22 are retained within the legs 18. The repulsive forces between the groups of magnets 20 are large, and so the design of the end plugs 26 is such that these large loads can be withstood.

An end cap 28 is located upon each end plug 26, and antislip bands 30 are provided, at intervals, along the length of each leg 18. The bands 30 and caps 28 are of materials selected such that damage to the roll 12 is unlikely to occur which the analysis device 10 is used.

The support 16 comprises a housing 32 to which, as mentioned above, the legs 18 are secured by bolts that extend into threaded bores formed in the inner supports 24. The microscope 14 is coupled to the support 16 in such a manner that the microscope 14 is guided for movement along a linear path relative to the support 16 in a direction towards and away from the roll 12.

Within the housing 32 is located a stepper motor 34 operable, via a coupling-box 36, to drive a threaded shaft 38 for rotation. A first coupling member 40 is in threaded engagement with the threaded shaft 38 and is arranged to translate along the threaded shaft 38 upon rotation of the threaded shaft 38. A second coupling member 42 abuts an upper surface of the first coupling member 40 (in the orientation illustrated). Magnets 44, 46 are attached to the first and second coupling members 40, 42, and are arranged such that the magnetic attraction therebetween releasably attaches the first and second coupling members 40, 42 to one another. The second coupling member 42 is connected to the microscope 14. Consequently, in use, operation of the stepper motor 34 to rotate or adjust the angular position of the shaft 38 drives the first and second coupling members 40, 42 for axial movement which, in turn, drives the microscope 14 for movement along its path of movement.

The first and second coupling members 40, 42 are arranged such that, when coupled to one another, the coupling members 40, 42 adopt positions in which they are spaced from the walls of the housing 32 and other components located within the housing 32 such that the axial movement of the coupling members 40,42 that occurs in use does not result in contact or binding between the coupling members 40, 42 and the housing 32. Accordingly, movement of the microscope 14 under the control of the stepper motor 34 is not resisted or restricted by such engagement and occurs smoothly.

The design of the stepper motor 34, coupling-box 36 and associated components is such that the microscope 14 can be accurately moved in a controlled manner through very small distances, for example in the region of 0.001 mm.

In use, when it is desired to undertake analysis of the surface of a roll 12 including a steel core, the analysis device 10 is attached to the roll 12 by positioning the device 10 such that the legs 18 thereof are adjacent the surface of the roll 12. The magnetic attraction arising from the presence of the magnets 20 within the legs 18 serves to attach the device 10 to the roll 12 sufficiently firmly that the device 10 is fully supported by the roll 12 and that relative movement therebetween is resisted. The attachment may be undertaken with the device 10 in any angular position relative to the axis of the roll 12. Accordingly, if desired, the device may be positioned above, beneath, or to a side of the roll 12. As a result, it will be appreciated that in many applications analysis may be undertaken without requiring the roll 12 to be removed from the press in which it is mounted, even where little space is available above the roll 12.

Regardless as to the orientation of the device 10, the coupling components 40, 42 are held in engagement with one another by virtue of the magnet coupling therebetween. The position of the microscope 14 can thus be accurately controlled during analysis by the operation of the motor 34.

If, during handling of the device 10, an external load is applied to the microscope 14, for example by impact with another piece of equipment, the coupling members 40, 42 are able to separate, allowing movement of the microscope 14 independently of the operation of the motor 14, thereby reducing the risk of damage to the device 10. Upon subsequent movement of the microscope 14 to bring the coupling members 40, 42 back into engagement with one another, the magnetic coupling therebetween serves to re-establish the drive coupling between the motor 34 and the microscope 14 such that movement of the microscope 14 can once again be controlled, accurately, by the motor 34.

With the device 10 attached to the roll 12, analysis of the surface of the roll 12 can be undertaken using the microscope 14, the motor 34 being used during analysis to adjust the position of the microscope 14. After analysis, the device 10 may be pulled away from the roll 12, to detach it therefrom. It may then be reattached in another position, if desired, for further analysis to be undertaken.

If used to analyse rolls with non-magnetic material cores, then the device 10 will not magnetically attach thereto. In such situations, analysis can still be undertaken by resting the device 10 upon the top of the roll 12.

Whilst the description hereinbefore is of one example embodiment of the invention, it will be appreciated that a wide range of modifications or alterations may be made thereto without departing from the scope of the invention as defined by the appended claims.

## Claims

1. An analysis device comprising a scanning microscope mounted upon a support such that at least part of the microscope is movable relative to the support, and magnetic mounting means associated with the support whereby the analysis device can be attached to a roll, in use, the support comprising a pair of legs arranged parallel to one another and spaced apart from one another and arranged, in use, to engage the surface of the roll, each leg extending substantially parallel to an axis of the roll, in use.

2. A device according to Claim 1, wherein the magnetic mounting means is associated with the legs of the support.

3. A device according to Claim 1 or Claim 2, wherein each leg is of hollow form.

4. A device according to Claim 3, wherein the magnetic mounting means comprises at least one magnet located within at least one of the legs.

5. A device according to Claim 4, wherein both legs are provided with at least one magnet.

6. A device according to any of the preceding claims, wherein each leg accommodates a plurality of magnets.

7. A device according to Claim 6, wherein the magnets comprise disc magnets.

8. A device according to Claim 7, wherein the magnetic mounting means further comprises at least one spacer plate located between a pair of the magnets.

9. A device according to Claim 8, wherein the magnets of the said pair are oppositely orientated such that a magnetic repulsive force is present therebetween.

10. A device according to any of the preceding claims, wherein the support further comprises a motorised drive arrangement whereby at least part of the microscope can be driven for movement relative to the support, the drive arrangement including a release mechanism to allow movement of the microscope independently of the operation of the drive arrangement.

11. A device according to Claim 10, wherein the release mechanism includes a magnetic coupling that is engaged in normal use, and that can release in the event that a load greater than a predetermined load is experienced.

12. A device according to Claim 11, wherein the magnetic coupling comprises a first coupling member movable by a motor of the drive arrangement and a second coupling member associated with the microscope, the first and second coupling members being arranged to engage one another in use, each coupling member carrying a magnet, the magnets being arranged to attract one another to retain the coupling members in engagement with one another in normal use.

13. An analysis device comprising a scanning microscope mounted upon a support such that at least part of the microscope is movable relative to the support, wherein the support further comprises a motorised drive arrangement whereby at least part of the microscope can be driven for movement relative to the support, the drive arrangement including a release mechanism to allow movement of the microscope independently of the operation of the drive arrangement, and wherein the release mechanism includes a magnetic coupling that is engaged in normal use, and that can release in the event that a load greater than a predetermined load is experienced.
